Europäisches Patentamt

European Patent Office

Office européen des brevets

(11) Veröffentlichungsnummer : **0 411 450 B1**

(12) **EUROPÄISCHE PATENTSCHRIFT**

(45) Veröffentlichungstag der Patentschrift :
**15.07.92 Patentblatt 92/29**

(51) Int. Cl.$^5$ : **B60K 17/16**

(21) Anmeldenummer : **90114212.5**

(22) Anmeldetag : **25.07.90**

(54) **Abstützvorrichtung für das Gehäuse eines Fahrzeugdifferentialgetriebes.**

(30) Priorität : **02.08.89 US 388462**

(43) Veröffentlichungstag der Anmeldung :
**06.02.91 Patentblatt 91/06**

(45) Bekanntmachung des Hinweises auf die
Patenterteilung :
**15.07.92 Patentblatt 92/29**

(84) Benannte Vertragsstaaten :
**DE FR GB IT**

(56) Entgegenhaltungen :
**DE-A- 3 342 502
DE-A- 3 737 421
DE-A- 3 803 236
GB-A- 2 204 839
US-A- 4 262 766
US-A- 4 452 332**

(73) Patentinhaber : **DEERE & COMPANY
1 John Deere Road
Moline, Illinois 61265 (US)**

(72) Erfinder : **Kasemeier, James Edward
6034 Reed Street
Waterloo, Iowa 50703 (US)**
Erfinder : **Fichtinger, Gary R.
914 Whispering Lane
Hazel Green, Wisconsin 53811 (US)**

(74) Vertreter : **Feldmann, Bernhard et al
DEERE & COMPANY European Office Patent
Department Steubenstrasse 36-42
W-6800 Mannheim 1 (DE)**

## Beschreibung

Die Erfindung betrifft eine Abstützvorrichtung für das Gehäuse eines Fahrzeugdifferentialgetriebes mit einem am Gehäuse befestigten, der Antriebswelle gegenüberliegenden Lagerzapfen, der an einem Tragteil drehbar gelagert ist, welches seinerseits an einem Rahmenteil des Fahrzeuges befestigbar ist, und mit einer den Lagerzapfen stirnseitig abstützenden Abdeckscheibe.

Bei einigen Fahrzeugen kann das Achs- und Differentialgetriebegehäuse um die Achse der Fahrzeugantriebswelle hinund herpendeln. In diesem Fall wird das Gehäuse des Differentialgetriebes an seinen gegenüberliegenden Seiten verdrehbar von Fahrzeugrahmenteilen getragen.

Diese Traganordnung muß ein gewisses axiales Spiel des Differentialgetriebegehäuses zwischen den beiden Drehlagerstellen zulassen. Gemäß einer bekannten Anordnung läßt sich das Spiel durch die Anzahl von Beilagen einstellen, die zwischen eine der Drehstützen und Verschleißplatten, welche am Differentialgetriebegehäuse angrenzend angeordnet sind, eingefügt sind. Diese Drehlageranordnung enthält einen mittleren Lagerzapfen, welcher durch Öffnungen in der Tragstütze, den Beilagen, den Verschleißplatten und einer Lagerbüchse gesteckt ist, wobei die Lagerbüchse ihrerseits in ein Ende des Differentialgetriebegehäuses eingesetzt ist. Mit einer derartigen Drehlageranordnung läßt sich die richtige Anzahl der Beilagen nur dadurch einstellen, daß zunächst das ganze Achs- und Differentialgetriebe montiert und das Spiel gemessen wird, dann das ganze Achs- und Differentialgetriebe wieder demontiert und die gewünschte Anzahl von Beilagen eingefügt wird und schließlich das Achs- und Differentialgetriebe wieder eingebaut wird. Dies erfordert einen hohen Arbeitsaufwand.

Gemäß einer anderen Konstruktion wird der Axialdruck durch eine Scheibe abgefangen, die durch eine Drehlagerhalterung aufgenommen und in ihrer Lage durch eine Abdeckung gehalten wird, welche mit der Drehlagerhalterung verschraubt ist. Dieser Konstruktion zufolge muß die Drehlagerhalterung länger ausgebildet sein, als dies zum Tragen der Last erforderlich wäre.

Die mit der Erfindung zu lösende Aufgabe wird darin gesehen, eine Abstützvorrichtung für das Gehäuse eines Differentialgetriebes der eingangs genannten Art möglichst kurz und kompakt und mit wenigen Teilen auszubilden. Die Abstützvorrichtung soll eine einfache Einstellung des axialen Spiels ermöglichen, ohne daß eine weitgehende Demontage des Achs- und Differentialgetriebes erforderlich wäre.

Die Aufgabe wird erfindungsgemäß dadurch gelöst, daß die Abdeckscheibe lösbar am Tragteil befestigbar ist und daß wenigstens ein Abstandsteil zwischen das Tragteil und die dem Tragteil zugewandte Stirnfläche der Abdeckscheibe eingefügt ist. Dabei hat die Abdeckscheibe einen mittleren Bereich, der unmittelbar mit der Stirnseite des Lagerzapfens in Eingriff steht und als axiales Widerlager dient.

Durch die Dicke und Anzahl der Abstandsteile, bei denen es sich beispielsweise um Abstandsscheiben handeln kann, läßt sich der Betrag des axialen Spiels zwischen dem Lagerzapfen und der Widerlagerfläche der Abdeckscheibe einstellen. Zur Einstellung des axialen Spiels braucht lediglich die Abdeckscheibe von dem Tragteil gelöst, eine geeignete Anzahl von Abstandsscheiben eingefügt und die Abdeckscheibe wieder am Tragteil befestigt zu werden. Dabei kann der Lagerzapfen in seiner Befestigung mit dem Tragteil verbleiben. Die unmittelbare Befestigung der Abdeckscheibe am Tragteil erlaubt eine kompakte Ausbildung der Abstützvorrichtung mit einer entsprechend kurzen axialen Baulänge. Weitere, die Abdeckscheibe fixierende Bauteile sind nicht erforderlich.

Vorzugsweise enthält das Tragteil einen hohlen Tragring, in dem der Lagerzapfen gelagert und über Stützmittel am Rahmenteil des Fahrzeuges befestigbar ist. Der Tragring weist dabei eine ringförmige Stirnfläche auf, an der ein benachbartes Abstandsteil anliegt. Das Abstandsteil kann dabei im wesentlichen den gleichen Querschnitt aufweisen wie der Tragring, so daß der Lagerzapfendurchmesser geringer ist als der Innendurchmesser des Abstandsteiles und der Lagerzapfen gegebenenfalls durch das Abstandsteil gesteckt werden kann.

Zur Befestigung des Abdeckteiles am Tragteil werden vorzugsweise auf dem Umfang gleichmäßig angeordnete Gewindeschrauben verwendet. Diese Schrauben können sich durch Bohrungen in den Abstandsteilen erstrecken.

Weitere vorteilhafte Ausgestaltungen und Weiterbildungen der Erfindung gehen aus den Unteransprüchen hervor.

Anhand der Zeichnung, die ein Ausführungsbeispiel der Erfindung zeigt, sollen die Erfindung sowie weitere Vorteile und vorteilhafte Weiterbildungen und Ausgestaltungen der Erfindung näher beschrieben und erläutert werden.

Es Zeigt:

Fig. 1 die teilweise geschnittene Seitenansicht eines Differentialgehäuses mit einer der Antriebswelle gegenüberliegenden erfindungsgemäßen Traganordnung,

Fig. 2 die gegenüber Fig. 1 vergrößerte Seitenansicht einer erfindungsgemäßen Traganordnung,

Fig. 3 eine Darstellung in Richtung 3 - 3 gemäß Fig. 1 und

Fig. 4 eine Darstellung in Richtung 4 - 4 gemäß Fig. 1.

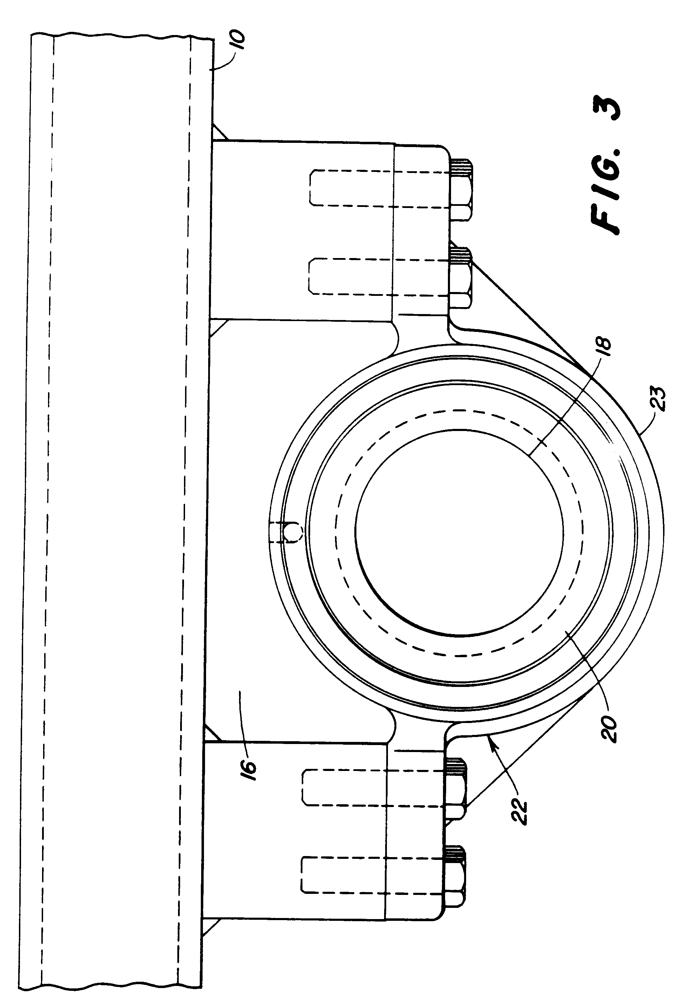

Ein nicht dargestelltes Fahrzeug, beispielsweise ein landwirtschaftlicher Schlepper, weist zwei Rahmenteile 10 und 12 auf, die seitlich und parallel zu der Fahrzeugachse 14 verlaufen und auf gegenüberliegenden Seiten der Fahrzeugachse 14 liegen. Ein Differentialgetriebe hat ein Gehäuse 16 mit einer Antriebsseite, an der eine Verbindung mit einer Antriebswelle 18 herstellbar ist. Ein hohles zylindrisches Lagergehäuse 20 ist mittels Schrauben an der Antriebsseite des Gehäuses 16 befestigt. Eine erste Traganordnung 22 weist einen Tragring 23 auf, in welchem das Lagergehäuse über Lager 24 und 26 verschwenkbar gelagert ist. Wie am besten aus der Fig. 3 ersichtlich, ist die Traganordnung 22 am Rahmenteil 10 festgeschraubt.

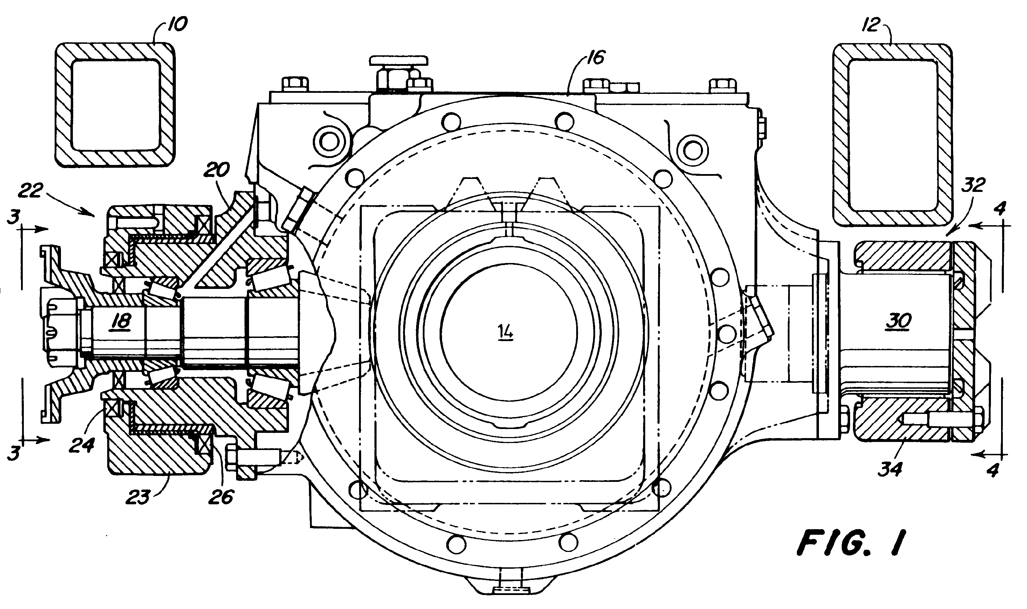

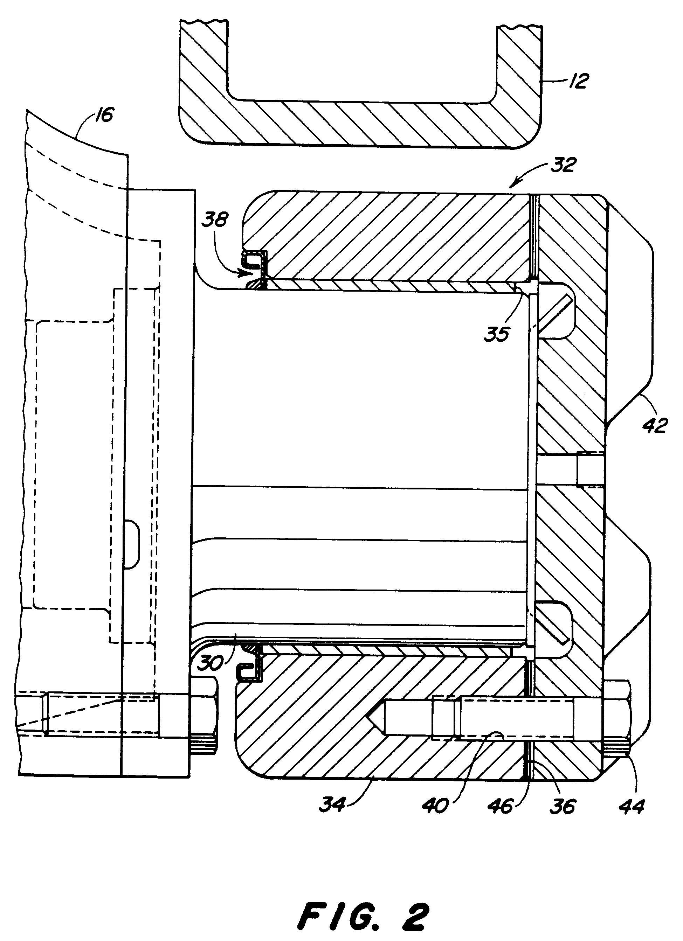

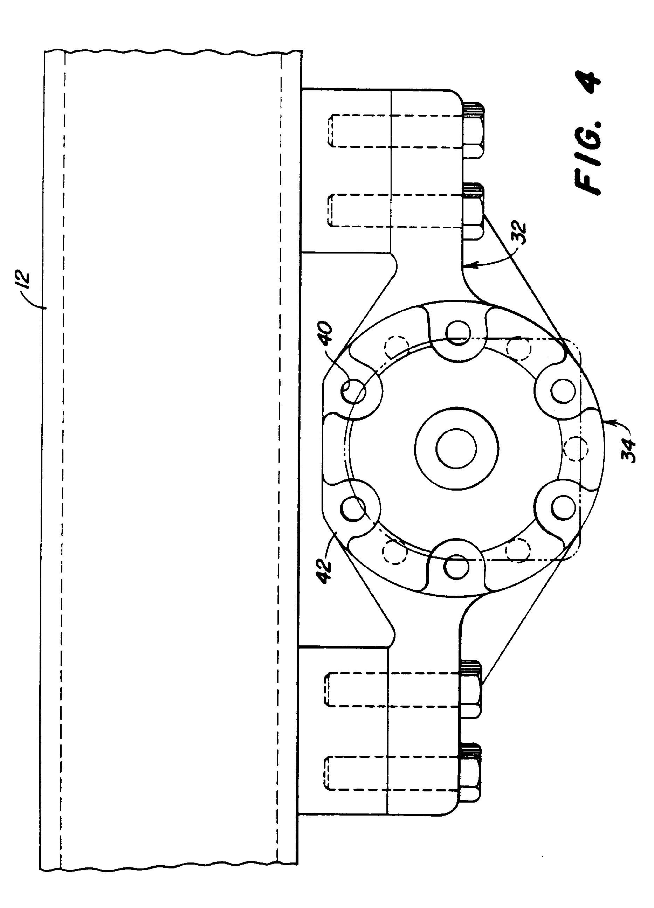

Den Figuren 1 und 2 zufolge ist ein vorzugsweise massiver zylindrischer Lagerzapfen 30 an der der Antriebsseite gegenüberliegenden Seite des Gehäuses 16 festgeschraubt. Dieser Lagerzapfen 30 fluchtet mit dem Lagergehäuse 20 und ragt über die der Antriebsseite abgewandten Seite des Gehäuses 16 hinaus. Ein zweites Tragteil 32 enthält einen hohlen Tragring 34, der verschwenkbar auf einer Büchse 35 und dem Lagerzapfen 30 angeordnet ist. Das zweite Tragteil 32 ist am Rahmenteil 12 festgeschraubt, wie es am besten aus Fig. 4 ersichtlich ist. Eine Dichtung 38 schützt den Zwischenraum zwischen dem Tragring 34 und dem Lagerzapfen 30 vor Verschmutzung. Der Tragring 34 weist eine ringförmige, axial endende Stirnfläche 36 auf, in die sich mehrere Gewindesackbohrungen 40 erstrecken.

Eine Abdeckscheibe 42 mit einer im wesentlichen kreisförmigen äußeren Begrenzung ist durch Schrauben 44, die in die Bohrungen 40 eingeschraubt sind, an dem Tragring 34 befestigt. Eine oder mehrere Abstandsscheiben 46 sind zwischen der Stirnfläche 36 und der Abdeckscheibe 42 angeordnet, wodurch sich der Abstand zwischen der Abdeckscheibe 42 und der Stirnseite des Lagerzapfens 30 einstellen läßt. Durch geeignete Wahl der Anzahl der Abstandsscheiben 46 läßt sich der Betrag des Spiels des Differentialgehäuses 16 in Richtung parallel zur Antriebswellenachse wunschgemäß einstellen. Die Abdeckscheibe 42 hat einen mittleren Bereich, der innerhalb der Abstandsscheibe liegt und als axiales Gegenlager für den Lagerzapfen 30 dient. An diesen mittleren Bereich kann sich die Stirnseite des Lagerzapfens 30 unmittelbar abstützen. Hierdurch ist die axiale Bewegung des Gehäuses 16 begrenzbar. Eine zusätzliche Drucklagerplatte braucht daher nicht in den Tragring 34 des Tragteiles 32 eingesetzt zu werden. Es kann eine kompakte, leicht einstellbare Zapfenabstützanordnung geschaffen werden.

Auch wenn die Erfindung lediglich an Hand eines Ausführungsbeispieles beschrieben wurde, erschließen sich für den Fachmann im Lichte der vorstehenden Beschreibung viele verschiedenartige Alternativen, Modifikationen und Varianten, die unter die vorliegende Erfindung fallen.

## Patentansprüche

1. Abstützvorrichtung für das Gehäuse (16) eines Fahrzeugdifferentialgetriebes mit einem am Gehäuse (16) befestigten, der Antriebswelle (18) gegenüberliegenden Lagerzapfen (30), der an einem Tragteil (32) drehbar gelagert ist, welches seinerseits an einem Rahmenteil (12) des Fahrzeuges befestigbar ist, und mit einer den Lagerzapfen (30) stirnseitig abstützenden Abdeckscheibe (42), dadurch gekennzeichnet daß die Abdeckscheibe (42) lösbar am Tragteil (32) befestigbar ist und daß wenigstens ein Abstandsteil (46) zwischen das Tragteil (32) und die dem Tragteil (32) zugewandte Stirnfläche der Abdeckscheibe (42) einfügbar ist.

2. Abstützvorrichtung nach Anspruch 1, dadurch gekennzeichnet, daß das Tragteil (32) einen hohlen Tragring (34) enthält, in dem der Lagerzapfen (30) gelagert ist und der über Stützmittel am Rahmenteil (12) des Fahrzeuges befestigbar ist, und daß der Tragring (34) eine ringförmige Stirnfläche (36) aufweist, an der ein Abstandsteil (46) anliegt.

3. Abstützvorrichtung nach Anspruch 2, dadurch gekennzeichnet, daß zwischen Tragring (34) und Lagerzapfen (30) eine zylinderförmige Büchse (35) angeordnet ist.

4. Abstützvorrichtung nach Anspruch 2 oder 3, dadurch gekennzeichnet, daß mehrere ringförmige Abstandsteile (46) zwischen der Abdeckscheibe (42) und der Stirnfläche (36) des Tragringes (34) eingespannt sind, wobei jedes Abstandsteil (46) sich mit wenigstens einem benachbarten Abstandsteil (46) überdeckt.

5. Abstützvorrichtung nach einem der Ansprüche 1 bis 4, dadurch gekennzeichnet, daß jedes Abstandsteil (46) eine zentrale Öffnung enthält, deren Querschnitt ausreicht, um den Lagerzapfen (30) hindurchzustecken.

6. Abstützvorrichtung nach einem der Ansprüche 1 bis 5, dadurch gekennzeichnet, daß wenigstens ein Abstandsteil (46) mehrere axial ausgerichtete Öffnungen aufweist, durch die sich die der Befestigung des Abdeckteiles (42) am Tragteil (32) dienenden Befestigungsmittel erstrecken.

7. Abstützvorrichtung nach Anspruch 6, dadurch gekennzeichnet, daß als Befestigungsmittel Schrauben dienen, die durch Bohrungen des Abdeckteiles (42) und des Abstandsteiles (46) steckbar und in Gewindebohrungen (40) des Tragteiles (32) einschraubbar sind.

**Claims**

1. Support device for the housing (16) of a vehicle differential gear, with a support peg (30) fixed to the housing (16) opposite the drive shaft (18), the support peg being rotatably mounted on a support part (32) which is for its part adapted to be fixed to a frame part (12) of the vehicle, and with a cover plate (42) supporting the bearing peg (30) at its end, characterized in that the cover plate (42) is capable of being fixed releasably to the support part (32) and in that at least one spacer part (46) can be introduced between the support part (32) and the face of the cover plate (42) facing the support part (32).

2. Support device according to claim 1, characterized in that the support part (32) includes a hollow support ring (34) in which the support peg (30) is journalled and which can be fixed to the frame part (12) of the vehicle by way of support means, and in that the support ring (34) has an annular end surface (36) on which a spacer part (46) bears.

3. Support device according to claim 2, characterized in that a cylindrical bush (35) is arranged between the support ring (34) and the bearing peg (30).

4. Support device according to claim 2 or 3, characterized in that a plurality of annular spacer parts (46) are clamped between the cover plate (42) and the end surface (36) of the support ring (34), each spacer part (46) overlapping at least one adjacent spacer part (46).

5. Support device according to any of claims 1 to 4, characterized in that each spacer part (46) has a central opening of sufficient cross-section for the bearing peg (30) to stick through it.

6. Support device according to any of claims 1 to 5, characterized in that at least one spacer part (46) has a plurality of axially aligned openings, through which extend the fixing means serving to attach the cover plate (42) to the support part (32).

7. Support device according to claim 6, characterized in that screws serve as the fixing means, being adapted to be stuck through bores in the cover plate (42) and the spacer part (46) and screwed into threaded bores (40) in the support part (32).

**Revendications**

1. Dispositif d'appui pour le boîtier (16) du différentiel d'un véhicule, comportant un pivot (30), fixé au boîtier (16), opposé à l'arbre de transmission (18) et monté à rotation dans un élément porteur (32), qui est lui-même fixé à une partie de châssis (12) du véhicule, et comportant un disque de recouvrement (42) soutenant du côté frontal le pivot (30), caractérisé en ce que le disque de recouvrement (42) peut être fixé de manière amovible à l'élément porteur (32), et en ce qu'au moins une pièce d'écartement (46) peut être introduite entre l'élément porteur (32) et la face frontale du disque de recouvrement (42) qui est tournée vers l'élément porteur (32).

2. Dispositif d'appui selon la revendication 1, caractérisé en ce que l'élément porteur (32) comporte une bague porteuse creuse (34), dans laquelle est monté le pivot (30) et qui peut être fixée par des moyens d'appui sur la partie de châssis (12) du véhicule, et en ce que la bague porteuse (34) présente une face frontale annulaire (36), contre laquelle s'applique une pièce d'écartement (46).

3. Dispositif d'appui selon la revendication 2, caractérisé en ce qu'un fourreau cylindrique (35) est disposé entre la bague porteuse (34) et le pivot (30).

4. Dispositif d'appui selon la revendication 2 ou 3, caractérisé en ce que plusieurs pièces d'écartement annulaires (46) sont insérées entre le disque de recouvrement (42) et la face frontale (36) de la bague porteuse (34), chaque pièce d'écartement (46) recouvrant au moins une pièce d'écartement (46) voisine.

5. Dispositif d'appui selon l'une des revendications 1 à 4, caractérisé en ce que chaque pièce d'écartement (46) comporte une ouverture centrale, dont la section est suffisante pour y enfiler le pivot (30).

6. Dispositif d'appui selon l'une des revendications 1 à 5, caractérisé en ce qu'au moins une pièce d'écartement (46) présente plusieurs trous axiaux, à travers lesquels s'étendent les moyens de fixation servant à fixer le disque de recouvrement (42) à l'élément porteur (32).

7. Dispositif d'appui selon la revendication 6, caractérisé en ce qu'on utilise comme moyens de fixation des vis, qui peuvent être enfilées par des trous du disque de recouvrement (42) et de la pièce d'écartement (46), et vissées dans des trous taraudés (40) de l'élément porteur (32).

FIG. 1

EP 0 411 450 B1

**FIG. 2**

FIG. 3

FIG. 4